# EUROPÄISCHE PATENTSCHRIFT

(11) **EP 3 930 870 B1**
(45) Veröffentlichungstag und Bekanntmachung des Hinweises auf die Patenterteilung: **24.08.2022**
(21) Anmeldenummer: 20820318.2
(22) Anmeldetag: 27.11.2020
(51) Int. Cl.: B01D 63/06, B01D 33/31, B01D 33/073, B01D 33/37, B01D 33/72, B01D 33/74, B01D 35/06, B01D 35/18, B01D 63/16

(54) **VORRICHTUNG ZUM FILTRIEREN VON FLÜSSIGKEITEN**
DEVICE FOR FILTERING LIQUIDS
DISPOSITIF DE FILTRATION DE LIQUIDES

(30) Priorität: 02.12.2019 AT 510482019
(43) Veröffentlichungstag der Anmeldung: 05.01.2022
(73) Patentinhaber: Pantreon GmbH, 4810 Gmunden (AT)
(72) Erfinder: LÜER, Andreas, 4655 Vorchdorf (AT)
(74) Vertreter: Wächter, Jochen
(86) Internationale Anmeldenummer: PCT/AT2020/060423
(87) Internationale Veröffentlichungsnummer: WO 2021/108821

(56) Entgegenhaltungen:
- EP-A1- 2 123 346
- WO-A2-2004/080510
- WO-A2-2008/018837
- AT-A4- 508 893

## Beschreibung

### Technisches Gebiet

Die Erfindung bezieht sich auf eine Vorrichtung zum Filtrieren von Flüssigkeiten mit einem Behälter, einem Behältereinlass zum Einleiten einer zu filtrierenden Flüssigkeit in den Behälter, einem Behälterauslass für ein Retentat und wenigstens einem um die Behälterachse rotierend antreibbaren Rotor mit einer in einer Stirnwand gelagerten Hohlwelle und einer daran befestigten Tragvorrichtung für mit einem Abstand zur Behälterachse angeordnete Filterelemente, die mit der Hohlwelle zur Ableitung eines gefilterten Permeats aus dem Behälter strömungsverbunden sind, wobei ein Innenmantel des Behälters eine Leiteinrichtung zum Umleiten der Flüssigkeit gegen die Filterelemente umfasst.

### Stand der Technik

Aus der AT508893B1 ist eine Vorrichtung gemäß dem Oberbegriff bekannt. Die dort offenbarte Vorrichtung umfasst einen Behälter mit Behältereinlässen zum Einleiten einer zu filtrierenden Flüssigkeit. Die Flüssigkeit wird dabei über semipermeable Filterelemente, beispielsweise Membranen, gefiltert und als Permeat über eine mit den Filterelementen strömungsverbundene Hohlwelle abgeleitet. Um eine Deckschichtbildung auf den Filterelementen zu reduzieren, sind diese über eine Tragvorrichtung an einem Rotor gelagert. Durch die Rotation der Filterelemente treten während der Filtration Scherkräfte an den Filterelementen auf, die zu einer mechanischen Abreinigung der Filteroberfläche führen. Zur gezielten Erhöhung der Turbulenz im Bereich der Filterelemente bzw. zur Erniedrigung der Turbulenz außerhalb des Bereichs der Filterelemente weist der Innenmantel des Behälters Leiteinrichtungen auf, wodurch die Filterleistung deutlich erhöht werden kann. Das nicht gefilterte Retentat wird über einen Behälterauslass abgeführt. Grundsätzlich soll die Vorrichtung zum Filtrieren unterschiedlicher Flüssigkeiten eingesetzt werden. Vor allem bei biogenen Suspensionen und Flüssigkeiten mit organischen Komponenten wie Proteinen und Kohlenhydraten treten jedoch oft schwer zu reproduzierende Prozessergebnisse auf, sodass die Anlage bei unterschiedlichen Abnehmern bzw. Betreibern variierende Filtrationsergebnisse erzielen.

Zur Konditionierung von Prozessbedingungen bei einer Wasser- bzw. Abwasserbehandlung ist es aus der US8551305 vorbekannt, Elektroden einzusetzen. Mehrere entgegengesetzt gepolte Elektroden sind dabei vertikal ausgerichtet in einem Behälter angeordnet und erzeugen ein auf das Wasser bzw. Abwasser wirkendes Spannungsfeld. Das Spannungsfeld kann beispielsweise zur Ionentrennung, zur Ausflockung, zur Desintegration und zur Oxidation von im Wasser bzw. Abwasser befindlichen Stoffen eingesetzt werden. Nachteilig ist allerdings, dass zur Erreichung des gewünschten gleichmäßigen Spannungsfeldes eine Vielzahl an Elektroden eingesetzt werden muss, was hohe Investitionskosten bedingt. Des Weiteren verhindert die dichte Packung der Elektroden den Einsatz anderer Aggregate zur Abwasserbehandlung. Die vorgeschlagene Anordnung der Elektroden bedingt über dies hinaus nur eine sehr geringe Grenzfläche zwischen fester Oberfläche der Elektrode und der im Behälter befindlichen flüssigen Phase, weswegen vorwiegend Effekte des Volumens, wie beispielsweise Ionenleitung, Elektrolyse, oder Elektrophorese, nicht aber grenzflächenbedingte Phänomene, wie Elektrobenetzung, auftreten.

Generell stößt die membranbasierte Filtertechnologie bei zu filtrierenden Flüssigkeiten mit einem komplexen rheologischen und chemischen Verhalten auf das Problem, dass Prozessbedingungen und Betriebsszenarien nur äußerst schwer vorhersehbar und berechenbar sind. So sind bei der Auslegung von solchen Vorrichtungen vom Betreiber zur Verfügung gestellte Erfahrungswerte oder Erfahrungswerte von Vorrichtungen, die einen ähnlichen Prozess durchführen von großer Bedeutung.

### Darstellung der Erfindung

Der Erfindung liegt somit die Aufgabe zugrunde, eine Vorrichtung der eingangs geschilderten Art dahingehend zu verbessern, dass diese auch für unterschiedliche zu behandelnde Flüssigkeiten und bei schwer vorherzusehenden Betriebsszenarien ein reproduzierbares Filtrationsergebnis erzielen kann, ohne dabei die Grundkonstruktion der Vorrichtung abändern zu müssen.

Die Erfindung löst die gestellte Aufgabe dadurch, dass wenigstens eine Leiteinrichtung eine Aufnahme für eine Konditionierungsvorrichtung zum Einstellen von Prozessbedingungen ausbildet. Zufolge dieser Maßnahme wird die Wirksamkeit der Konditionierungsvorrichtung, die in den abhängigen Ansprüchen näher erläutert wird, durch das von der Leiteinrichtung erzeugte Strömungsprofil verstärkt. Die an der Innenwand des Behälters befindliche Leiteinrichtung bildet bevorzugter Weise eine in die Innenwand des Behälters eingearbeitete Vertiefung aus, welche im Wesentlichen drei Abschnitte aufweist, die der Flüssigkeit unterschiedliche Strömungscharakteristika aufprägt. Auf einen schwach gekrümmten Beruhigungsabschnitt, der der Flüssigkeit ein laminares Strömungsprofil aufzwingt, folgt ein Beschleunigungsabschnitt mit einer stärkeren Krümmung als der Beruhigungsabschnitt, der die Strömungsgeschwindigkeit der Flüssigkeit erhöht, ohne jedoch Turbulenzen zu erzeugen. An diesen Beschleunigungsabschnitt schließt ein Impulsabschnitt noch stärkerer Krümmung an, der die Flüssigkeit in Richtung der Behälterachse umlenkt, wobei durch die Beschleunigung und die Kollision mit den mit einem Abstand zur Behälterachse angeordneten Filterelementen Turbulenzen entstehen. Je nach Art der Konditionierungsvorrichtungen können die unterschiedlichen Abschnitte der Leiteinrichtung zur Optimierung der Konditionierung eingesetzt werden. Ist für eine erste Konditionierungsvorrichtung ein laminares Strömungsprofil vorteilhaft, so kann dieses am Beruhigungsabschnitt ansetzen. Wird hingegen eine unmittelbare Verteilung im gesamten Bereich des Behälters gewünscht, so kann beispielsweise ein Ansatz der Konditionierungsvorrichtung im Bereich des Impulsabschnittes ratsam sein. Die Leiteinrichtungen bieten demnach nicht nur die Möglichkeit einer Aufnahme unterschiedlicher Konditionierungsvorrichtungen, sondern ermöglichen es überdies hinaus, die Konditionierungsvorrichtungen und damit die gesamten Prozessbedingungen, wie Viskosität, Temperatur, Strömungsgeschwindigkeit, TOC-Wert, pO2-Gehalt, Druckdifferenz etc. optimal einzustellen. Grundsätzlich kann in der Vorrichtung eine Leiteinrichtung, welche eine Aufnahme für eine oder mehrere Konditionierungsvorrichtungen ausbildet, oder aber auch mehrere Leiteinrichtungen mit je einer Aufnahme für eine oder mehrere Konditionierungsvorrichtungen vorgesehen sein. Je nach Auslegung kann die Vorrichtung zum Filtrieren von Flüssigkeiten einen Rotor oder mehrere Rotoren aufweisen. Je Rotor ist dabei eine beispielsweise ringförmige Tragevorrichtung für mit einem Abstand zur Behälterachse angeordnete Filterelemente vorgesehen, die die Filterelemente mit einer Hohlwelle strömungstechnisch verbindet und so eine Ableitung des Permeats ermöglicht. Die Ableitung kann dabei über eine gemeinsame Hohlwelle erfolgen. Jeder Tragevorrichtung kann aber auch eine gesonderte Hohlwelle zugeordnet sein. Eine erste Tragevorrichtung kann dabei so ausgelegt sein, dass die darauf angeordneten Filterelemente eine äußere Kreisbahn verfolgen, eine zweite Tragevorrichtung kann so ausgelegt sein, dass die darauf angeordneten Filterelemente eine innere Kreisbahn, mit einem kleineren Durchmesser als die äußere Kreisbahn, verfolgen. Zwischen den Tragevorrichtungen der Rotoren kann beispielsweise auch eine einem Stator zugeordnete Tragevorrichtung für Filterelemente angeordnet sein, die naturgemäß nicht rotieren. Das von diesen stehenden Filterelementen filtrierte Permeat kann ebenfalls über eine Hohlwelle abgeleitet werden oder über eine andere Ableitung, die durch den Behälter führt.

Damit die Filterelemente ungestört unter maximaler Ausnutzung des Behälterinnenraums rotieren können, wird vorgeschlagen, dass zwischen der Leiteinrichtung und einem Außenmantel des Behälters ein Hohlraum gebildet ist, der als Aufnahme für die wenigstens eine Konditionierungsvorrichtung zum Einstellen der Prozessbedingungen wirkt. Die Konditionierungsvorrichtungen sind demnach nicht direkt im Behälterinnenraum angeordnet, wodurch das Strömungsprofil vorwiegend von den Leiteinrichtungen beeinflusst wird. Dies erleichtert etwaige der Auslegung der Vorrichtung vorangegangene Strömungsberechnungen, wie beispielsweise CFD-Simulationen. Überdies hinaus kann eine Vorrichtung auch im Nachhinein mit neuen Konditionierungsvorrichtungen nachgerüstet werden, ohne das Ergebnis der vorangegangenen Strömungssimulationen zu entwerten. Hinzu kommt noch der Vorteil, dass die Konditionierungsvorrichtung für etwaige Instandhaltungsarbeiten leicht zugänglich sind und beispielsweise empfindliche Teile der Konditionierungsvorrichtungen nicht in direkten Kontakt mit der Flüssigkeit im Behälter kommen.

Damit in der zu filtrierenden Flüssigkeit elektrokinetische Phänomene hervorgerufen werden können, empfiehlt es sich, dass als Konditionierungsvorrichtung wenigstens zwei zur Erzeugung eines Spannungsfeldes entgegengesetzt gepolte Elektroden zum Eintrag eines Spannungsfeldes in den Behälter vorgesehen sind.

Eine weitere Möglichkeit zum Hervorrufen solcher elektrokinetischen Phänomene ergibt sich, wenn als Konditionierungsvorrichtung eine Elektrode vorgesehen ist, wobei zum Eintrag eines Spannungsfeldes in den Behälter wenigstens einem Filterelement eine Gegenelektrode zugeordnet ist. Naturgemäß weist die Gegenelektrode ein von der Elektrode abweichendes Potential auf, was beispielsweise durch Erden des als Gegenelektrode wirkenden Edelstahl-Innenkerns des Filterelements erfolgen kann.

Es hat sich herausgestellt, dass es durch die Kombination einer Elektrode mit der Leiteinrichtung zu einer Erhöhung der grenzflächenbedingten Effekte, wie beispielsweise Elektrokapillarität kommt, wodurch die Membrangängigkeit des Permeats verbessert wird. Die Geometrie der Leiteinrichtungen kann auf besonders günstige Weise ausgenutzt werden, wenn die als Aufnahme für eine Elektrode wirkende Leiteinrichtung Teil der Elektrode ist. Dadurch wird erreicht, dass in einer inhomogenen Flüssigkeit die Grenzflächen zwischen festen/flüssigen, flüssigen/flüssigen und flüssigen/gasförmigen Inhaltsstoffen weitgehend über das Spannungsfeld aktiviert werden und zwar ausgehend von der Leiteinrichtung, wodurch der Beruhigungsabschnitt, der Beschleunigungsabschnitt und der Impulsabschnitt zur Verstärkung der Grenzflächenbildung ausgenutzt werden können. Die Wirkung der erwünschten elektrokinetischen Phänomene kann so deutlich erhöht werden, da durch den Beruhigungsabschnitt eine erhöhte Expositionsdauer der Flüssigkeit im Spannungsfeld erreicht wird und durch den Impulsabschnitt eine möglichst intensive Strömung erreicht wird, wodurch in Kombination mit der erhöhten Grenzfläche eine Intensivierung der elektrokinetischen Phänomene erreicht wird. Die induzierten elektrokinetischen Phänomene wirken sich jedoch nicht nur positiv auf die Membranleistung aus, sondern können auch Veränderungen der Inhaltsstoffe der zu filtrierenden Flüssigkeit auf molekularer Ebene hervorrufen. So können beispielsweise die Polarität, der Grad der Agglomeration, sowie chemische Reaktionen beeinflusst werden. Naturgemäß sind auch bekannte Verfahren, wie die Elektrolyse damit umsetzbar. Besonders geeignet ist diese Kombination von Membran-Filterelementen und Elektrokinetik in kolloiddispersen Flüssigkeiten (z.B. Milchprodukte), die durch die feine Verteilung der verschiedenen Phasen enorm große Grenzflächen bezogen auf ihr Volumen aufweisen. Durch die Interaktion der Membranen mit diesen Grenzflächen zwischen den Phasen werden diese mechanisch aktiviert. Entscheidend für die elektrostatische Wechselwirkung zwischen den Phasen (Teilchen, Tröpfchen, Bläschen) ist deren Ladung bzw. die zwischen den Molekülen wirkenden Van-der-Waals-Kräfte. Diese Wechselwirkungen können wiederum über die Elektrokinetik beeinflusst werden, sodass diese Membran-/Elektrokinetik-Verfahrenskombination die Aktivierung an den Phasengrenzen über gleichzeitig mechanische wie elektrostatische Impulse intensiviert.

Um ein gleichmäßiges Spannungsfeld zu erzeugen, kann an sich gegenüberliegenden Seiten des Innenmantels des Behälters je eine Leiteinrichtung, die eine Elektrode aufnimmt, vorgesehen sein. Naturgemäß müssen die Elektroden zur Erzeugung eines Spannungsfeldes entgegengesetzt gepolt sein. Es können auch mehrere, beispielsweise drei oder sechs umfangseitig am Innenmantel des Behälters angeordnete Leiteinrichtungen vorgesehen sein, die je eine Elektrode aufweisen und einen ersten Elektrodensatz bilden. Ein zweiter Elektrodensatz mit einer dem ersten Elektrodensatz entgegengesetzten Polung kann im Bereich der Behälterachse vorgesehen sein. Dadurch erstreckt sich das Spannungsfeld von den Elektroden in der Leiteinrichtung am Innenmantel des Behälters über die Filterelemente bis zur Elektrode im Bereich der Behälterachse. Bei einer Auslegung der Vorrichtung mit mehreren Rotoren, wobei zwischen den Tragevorrichtungen der Rotoren eine einem Stator zugeordnete Tragevorrichtung für Filterelemente angeordnet ist, können die Elektroden auch an der Tragevorrichtung des Stators angeordnet sein. Damit bei den verschiedenen möglichen Anordnungen der Elektroden ein stabiles Spannungsfeld aufrechterhalten werden kann, sind die Filterelemente vorzugsweise über Edelstahl-Innenkerne geerdet. Unabhängig von der tatsächlichen Anordnung der Elektroden kommt es durch die Rotation der Filterelemente in diesem Spannungsfeld aufgrund der großen Filterfläche und der hohen Relativgeschwindigkeiten zwischen der Flüssigkeit und den Filterelementen zu einer weiteren Erhöhung der Grenzflächen und damit der gewünschten elektrokinetischen Phänomene.

Um eine homogene Temperaturverteilung im gesamten Bereich des Behälters zu erzielen oder prozessbedingt günstige Temperaturniveaus zu erreichen bzw. zu halten, ohne die im Behälter geführte Flüssigkeit zu kontaminieren, kann als Konditionierungsvorrichtung ein Wärmetauscher für ein Temperierfluid zum Temperieren der zu filtrierenden Flüssigkeit im Behälter vorgesehen sein. Demnach wird kein zusätzlicher Platzbedarf für den Wärmetauscher im mit der Flüssigkeit befüllten Innenraum des Behälters benötigt. Durch die große Wärmeaustauschfläche der Leitflächen kann wiederum ein hoher Wärmedurchgang erreicht werden. Im einfachsten Fall kann im Hohlraum der Leiteinrichtung selbst das Temperierfluid geführt werden. Dazu kann die Leiteinrichtung über einen Temperierfluidzulauf und einen Temperierfluidablauf verfügen.

Damit unterschiedliche Prozessfluide steril in den Behälter eingetragen werden können und gleichzeitig eine beabsichtigte Beeinflussung des Strömungsprofils ermöglicht wird, wird vorgeschlagen, dass als Konditionierungsvorrichtung eine Dosiereinrichtung für in den Behälter eindüsbare Prozessfluide vorgesehen ist. Unter Prozessfluide sind sowohl Flüssigkeiten als auch Gase zu verstehen. Als Prozessfluide können beispielsweise Emulgatoren, Reinigungsmittel zum Reinigen der Filtermittel, Desinfektionsmittel, Sauerstoff, Stoffe zum Verstärken chemischer und/oder phasentrennender Prozesse eingesetzt werden. Zudem ist es denkbar, dass als Prozessfluide Temperierfluide eingesetzt werden. Analog zu bereits genannten Konditionierungsvorrichtungen kann die Dosiereinrichtung ebenfalls die Geometrie der Leiteinrichtung zur Verstärkung der Effekte der Prozessfluide eingesetzt werden. Die Dosiereinrichtungen können während der Filtration zur Manipulation vor Prozessbedingungen eingesetzt werden, oder aber auch vor bzw. nach der Filtration zur Sterilisation bzw. Reinigung des Behälters und der Filterelemente.

Soll die zu filtrierende Flüssigkeit, auch ohne einen Eintrag von Prozessfluiden in den Behälter, konditioniert werden können, kann als Konditionierungsvorrichtung eine Leuchteinrichtung zum Einbringen elektromagnetischer Wellen vorgesehen sein. Zur Desinfektion der Flüssigkeit kann beispielsweise UV-Strahlung eingesetzt werden.

Um eine homogene Beeinflussung der Prozess- und Strömungsbedingungen im gesamten Bereich des Behälters zu erreichen, wird vorgeschlagen, dass im Bereich der Behälterachse ein wenigstens eine Zentrumsleiteinrichtung für das Fluid aufweisender Rotor oder Stator angeordnet ist, der einen als Aufnahme wirkenden Hohlraum für die wenigstens eine Konditionierungsvorrichtung zum Einstellen der Prozessbedingungen ausbildet. Dadurch können sämtliche von den Konditionierungsvorrichtungen ausgehenden Einstellungen der Prozessbedingungen auch ausgehen vom Zentrum des Behälters durchgeführt werden. Die Zentrumsleiteinrichtung kann auch selbst als Elektrode dienen oder ein Bestandteil der Elektrode sein.

### Kurze Beschreibung der Erfindung

In der Zeichnung ist der Erfindungsgegenstand beispielsweise dargestellt. Es zeigen
- Fig. 1: einen schematischen Schnitt durch die erfindungsgemäße Vorrichtung in Vorderansicht.
- Fig. 2: einen schematischen Schnitt durch die erfindungsgemäße Vorrichtung in Draufsicht und
- Fig. 3: einen schematischen Schnitt durch eine alternative Ausführungsform der erfindungsgemäßen Vorrichtung in Draufsicht.

### Wege zur Ausführung der Erfindung

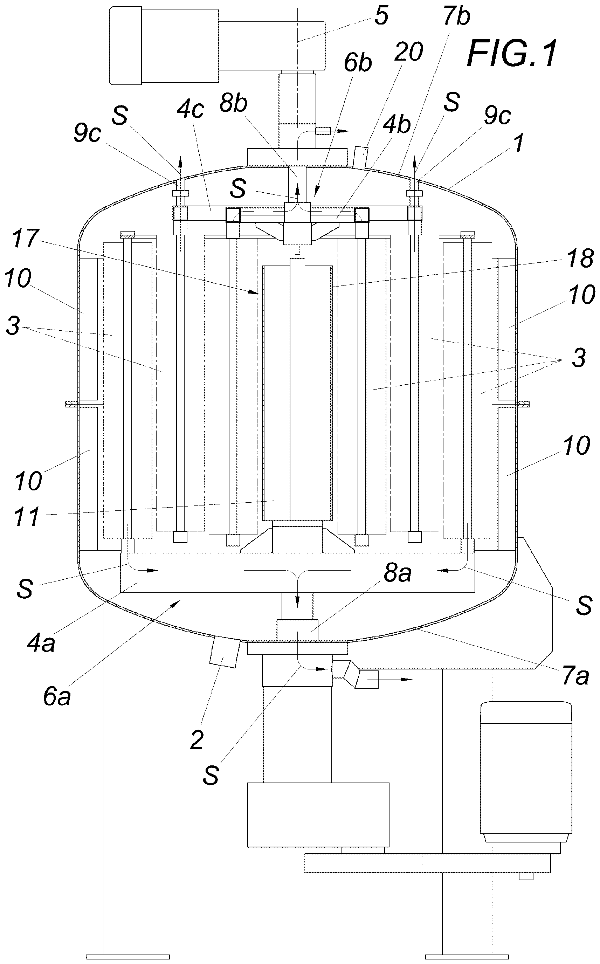

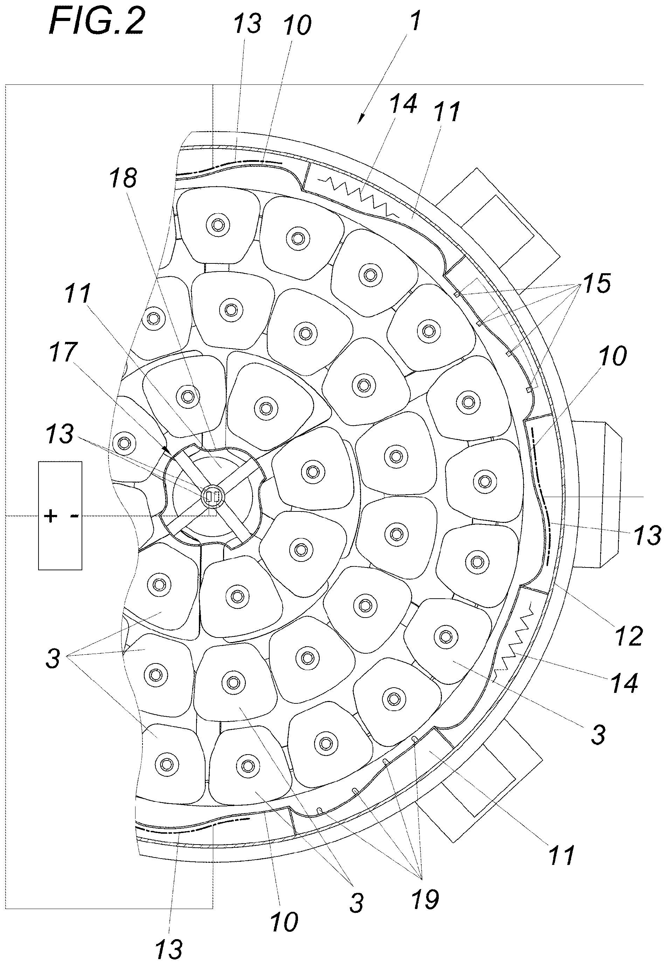

Eine erfindungsgemäße Vorrichtung zum Filtrieren von Flüssigkeiten, beispielsweise Wasser, Abwasser, inhomogene Flüssigkeitsmischungen, in der Lebensmittel- oder chemischen Industrie eingesetzte bzw. erzeugte Rohstoffe und (Zwischen)-Produkte, weist, wie insbesondere Fig. 1 zu entnehmen ist, einen Behälter 1 auf, der über einen oder mehrere als Behältereinlässe aber auch als Behälterauslässe fungierende Stutzen 2 befüllt werden kann. Die zu filtrierende Flüssigkeit wird mittels Filterelemente 3, welche auf einer Tragvorrichtung 4a,b,c angeordnet sind filtriert bzw. aufkonzentriert. Die in Fig. 1 dargestellte Ausführungsform weist drei Sätze an Filterelementen 3 auf. Ein erster Satz an Filterelementen 3 ist auf einer Tragvorrichtung 4a angeordnet, die die Filterelemente 3 auf einer äußeren Kreisbahn bewegt. Ein zweiter Satz an Filterelementen 3 ist auf einer Tragvorrichtung 4b angeordnet, die die Filterelemente 3 auf einer inneren Kreisbahn bewegt. Ein dritter Satz an nicht rotierenden Filterelementen 3 befindet sich zwischen den auf der Tragvorrichtung 4a und Tragvorrichtung 4b angeordneten Filterelementen 3 und ist auf einer Tragvorrichtung 4c angeordnet. Die Tragvorrichtungen 4a,b sind dabei je mit einem um eine Behälterachse 5 rotierend antreibbaren Rotor 6a,b, der jeweils eine in einer Stirnwand 7a,b gelagerte Hohlwelle 8a,b umfasst, antriebsverbunden und beabstanden die Filterelemente 3 von der Behälterachse 5. Die statische Tragvorrichtung 4c beabstanden die statischen Filterelemente 3 von der Behälterachse 5. Die Filterelemente 3 sind durch die Tragvorrichtungen 4a,b,c mit der Hohlwelle 8a,b bzw. mit Behälterauslässen 9c strömungsverbunden, wodurch das gefilterte Permeat entsprechend den Strömungspfeilen S aus dem Behälter 1 abgeführt werden kann. Das aufkonzentrierte Retentat kann über einen oder mehrere als Behälterauslass fungierende Stutzen 2 abgeführt werden. Zur Strömungsbrechung und zum Aufprägen eines gewünschten Strömungsprofils auf die zu filtrierende Flüssigkeit umfasst ein Innenmantel des Behälters 1 Leiteinrichtungen 10, die zudem die zu filtrierende Flüssigkeit gegen die Filterelemente 3 umleitet. Grundsätzlich kann nur eine Leiteinrichtung 10 vorgesehen sein, wiewohl sich besonders günstige Bedingungen zur Aufprägung eines gewünschten Strömungsprofils ergeben, wenn mehrere Leiteinrichtungen 10 umfangseitig am Innenmantel des Behälters 1 angeordnet sind, wie dies beispielsweise der Fig. 2 zu entnehmen ist. Erfindungsgemäß bilden die Leiteinrichtungen 10 eine Aufnahme für verschiedene Konditionierungsvorrichtungen zum Einstellen von Prozessbedingungen, wodurch eine Vorrichtung auch nach einer Erstinbetriebnahme erweitert werden kann. Dies hat zur Folge, dass auch im Nachhinein auf etwaige prozessbedingte Probleme reagiert und eine maximale Filterleistung erreicht werden kann, ohne durch Einbauten im Behälter 1 das Strömungsverhalten der zu filtrierenden Flüssigkeit auf negative Weise zu verändern.

Damit sich das berechnete, von den Leiteinrichtungen 10 auf die Flüssigkeit aufzuprägende Strömungsprofil auch bei einer Vielzahl von Konditionierungsvorrichtungen ungestört ausbilden kann, kann die Aufnahme, wie dies Fig. 2 zu entnehmen ist, dabei ein Hohlraum 11 sein, der von einer Leiteinrichtung 10 und einem Außenmantel 12 des Behälters 1 aufgespannt ist.

In Fig. 2 sind mögliche im als Aufnahme wirkenden Hohlraum 11 angeordnete Konditionierungsvorrichtungen dargestellt. Zum Eintrag von elektrokinetischen Phänomenen, beispielsweise die Elektrobenetzung, also die Änderung der Oberflächenspannung der zu filtrierenden Flüssigkeit, können in den Hohlräumen 11 Elektroden 13 vorgesehen sein. Besonders starke grenzflächenbedingte Phänomene ergeben sich dabei, wenn die als Aufnahme für die Elektrode 13 wirkende Leiteinrichtung 10 Teil der Elektrode 13 ist. Es versteht sich dabei von selbst, dass sämtliche eingesetzten Elektroden zum Behälter 1 hin isoliert sein müssen.

Zum Temperieren der im Behälter geführten Flüssigkeit, ohne diese zu kontaminieren, kann als Konditionierungsvorrichtung ein Wärmetauscher 14 vorgesehen sein.

Über Dosiereinrichtungen 15 können zudem Prozessfluide, beispielsweise Emulgatoren, Reinigungsmittel zum Reinigen der Filtermittel, Desinfektionsmittel, Sauerstoff, Stoffe zum Verstärken chemischer und/oder phasentrennender Prozesse eingedüst werden. Die Dosiereinrichtungen 15 können über Speichertanks verfügen.

Aus Fig.2 ist weiter eine Vorrichtung mit einer Vielzahl an Leiteinrichtungen 10 ersichtlich. Dies ist nur als Beispiel aufzufassen. Eine Vorrichtung kann eine beliebige Anzahl an Leiteinrichtungen umfassen. Außerdem kann eine erfindungsgemäße Vorrichtung beispielsweise nur Elektroden 13, nur einen Wärmetauscher 14 oder nur eine Dosiervorrichtungen 15 als Konditionierungsvorrichtung, sowie eine beliebige Kombination daraus aufweisen.

Wie insbesondere der Fig. 2 zu entnehmen ist, kann im Bereich der Behälterachse 5 ein Rotor oder Stator 17 angeordnet sein, der einen als Aufnahme wirkenden Hohlraum 11 für zwei Elektroden 13 ausbildet und eine Zentrumsleiteinrichtung 18 umfasst. Die im Stator 17 angeordneten Elektroden 13 weisen eine zu den Elektroden 13, welche in den am Innenmantel des Behälters 1 angeordneten Leiteinrichtungen 10 angeordnet sind, entgegengesetzte Ladung auf. Die Aufnahme des Stators 17 kann auch einen Wärmetauscher 14 oder eine Dosiereinrichtung 15 umfassen. In einer alternativen Ausführungsform kann die Zentrumsleiteinrichtung 18 selbst als Elektrode ausgebildet sein.

Sowohl in den Leiteinrichtungen 10 als auch in der Zentrumsleiteinrichtung 18 können auch Leuchteinrichtungen 19 als Konditionierungsvorrichtung vorgesehen sein.

Um vorteilhafte Bedingungen beim Befüllen und Entleeren der Vorrichtung zu erzeugen, kann diese über ein Entlüftungsventil 20 verfügen. Dieses Ventil 20 kann auch zur kontinuierlichen Entleerung des Retentats genutzt werden.

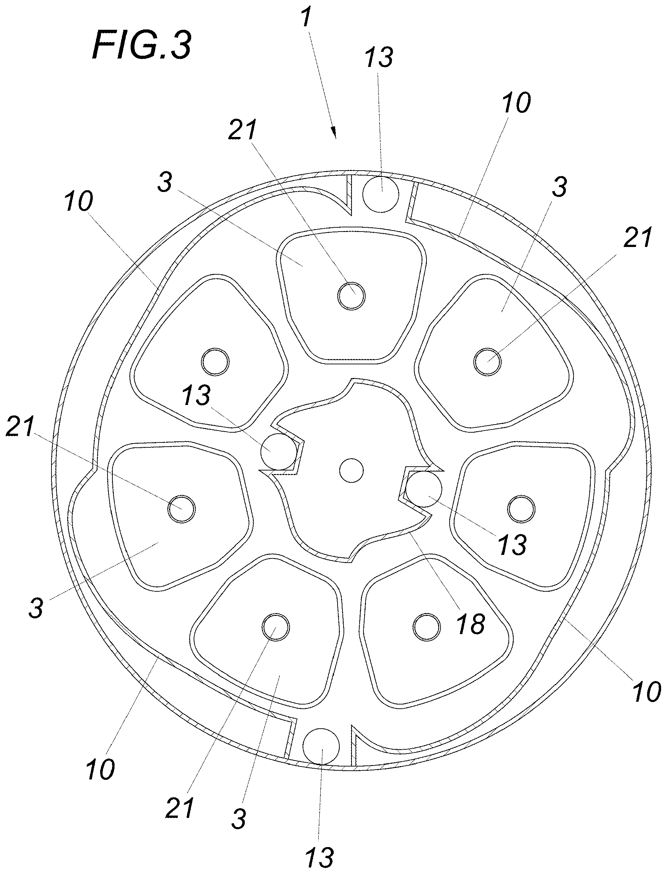

Fig. 3 zeigt eine alternative Ausführungsform der erfindungsgemäßen Vorrichtung. Die von den Leiteinrichtungen 10 gebildeten Aufnahmen nehmen einen ersten Satz an Elektroden 13 auf. Die Zentrumsleiteinrichtung 18 nimmt einen zweiten Satz an Elektroden 13 auf. Die Gegenelektroden werden von den Edelstahl-Innenkernen 21 der Filterelemente 3 gebildet. Das Spannungsfeld wirkt demnach zwischen dem ersten Satz an Elektroden 13 und den Edelstahl-Innenkernen 21 und zwischen dem zweiten Satz an Elektroden 13 und den Edelstahl-Innenkernen 21.

## Patentansprüche

1. Vorrichtung zum Filtrieren von Flüssigkeiten mit einem Behälter (1), einem Behältereinlass zum Einleiten einer zu filtrierenden Flüssigkeit in den Behälter (1), einem Behälterauslass für ein Retentat und wenigstens einem um die Behälterachse (5) rotierend antreibbaren Rotor (6) mit einer in einer Stirnwand (7) gelagerten Hohlwelle (8) und einer daran befestigten Tragvorrichtung (4) für mit einem Abstand zur Behälterachse (5) angeordnete Filterelemente (3), die mit der Hohlwelle (8) zur Ableitung eines gefilterten Permeats aus dem Behälter (1) strömungsverbunden sind, wobei ein Innenmantel des Behälters (1) wenigstens eine Leiteinrichtung (10) zum Umleiten der Flüssigkeit gegen die Filterelemente (3) umfasst,
**dadurch gekennzeichnet, dass**
die Vorrichtung wenigstens eine Konditionierungsvorrichtung umfasst, die zum Einstellen von Prozessbedingungen eingerichtet ist, wobei als wenigstens eine Konditionierungsvorrichtung eine Elektrode (13) vorgesehen ist, wobei zum Eintrag eines Spannungsfeldes in den Behälter (1) wenigstens einem Filterelement (3) eine Gegenelektrode zugeordnet ist; und
wenigstens eine Leiteinrichtung (10) eine Aufnahme für wenigstens eine Konditionierungsvorrichtung ausbildet.

2. Vorrichtung nach Anspruch 1, **dadurch gekennzeichnet, dass** zwischen der wenigstens einen Leiteinrichtung (10) und einem Außenmantel (12) des Behälters (1) ein Hohlraum (11) gebildet ist, der als Aufnahme für die wenigstens eine Konditionierungsvorrichtung zum Einstellen der Prozessbedingungen wirkt.

3. Vorrichtung nach Anspruch 1 oder 2, **dadurch gekennzeichnet, dass** die als Aufnahme für eine Elektrode (13) wirkende wenigstens eine Leiteinrichtung (10) Teil der Elektrode (13) ist.

4. Vorrichtung nach Anspruch 1 oder 2, **dadurch gekennzeichnet, dass** als wenigstens eine Konditionierungsvorrichtung weiterhin ein Wärmetauscher (14) für ein Temperierfluid zum Temperieren der zu filtrierenden Flüssigkeit im Behälter (1) vorgesehen ist.

5. Vorrichtung nach Anspruch 1 oder 2, **dadurch gekennzeichnet, dass** als wenigstens eine Konditionierungsvorrichtung weiterhin eine Dosiereinrichtung (15) für in den Behälter (1) eindüsbare Prozessfluide vorgesehen ist.

6. Vorrichtung nach einem der Ansprüche 1 bis 5, **dadurch gekennzeichnet, dass** im Bereich der Behälterachse (5) ein wenigstens eine Zentrumsleiteinrichtung (18) für das Fluid aufweisender Rotor oder Stator (17) angeordnet ist, der einen als Aufnahme wirkenden Hohlraum für wenigstens eine Konditionierungsvorrichtung zum Einstellen der Prozessbedingungen ausbildet.

## Claims

1. Apparatus for filtering liquids, having a container (1), having a container inlet for introduction into the container (1) of a liquid to be filtered, having a container outlet for a retentate, and having at least one rotor (6) which can be driven in rotation about the container axis (5) and which has a hollow shaft (8) mounted in an end wall (7) and has a support apparatus (4), fastened thereto, for filter elements (3), said filter elements being arranged at a distance from the container axis (5) and being connected in terms of flow to the hollow shaft (8) for discharge of a filtered permeate from the container (1), wherein an inner lateral surface of the container (1) comprises at least one guiding device (10) for diverting the liquid against the filter elements (3),
**characterized in that**
the apparatus comprises at least one conditioning apparatus which is configured for setting process conditions, wherein an electrode (13) is provided as at least one conditioning apparatus, wherein, for introduction of a voltage field into the container (1), at least one filter element (3) is assigned a counter-electrode; and
at least one guiding device (10) forms a receptacle for at least one conditioning apparatus.

2. Apparatus according to Claim 1, **characterized in that** a cavity (11) acting as a receptacle for the at least one conditioning apparatus for setting the process conditions is formed between the at least one guiding device (10) and an outer lateral surface (12) of the container (1).

3. Apparatus according to Claim 1 or 2, **characterized in that** the at least one guiding device (10) acting as a receptacle for an electrode (13) is part of the electrode (13).

4. Apparatus according to Claim 1 or 2, **characterized in that**, for controlling the temperature of the liquid to be filtered in the container (1), a heat exchanger (14) for a temperature-control fluid is furthermore provided as at least one conditioning apparatus.

5. Apparatus according to Claim 1 or 2, **characterized in that** a dosing device (15) for process fluids which can be injected into the container (1) is furthermore provided as at least one conditioning apparatus.

6. Apparatus according to one of Claims 1 to 5, **characterized in that**, in the region of the container axis (5), there is arranged a rotor or stator (17) which has at least one centre guiding device (18) for the fluid and which forms a cavity, acting as a receptacle, for at least one conditioning apparatus for setting the process conditions.

## Revendications

1. Dispositif de filtration de liquides, comprenant un récipient (1), une entrée de récipient pour introduire un liquide à filtrer dans le récipient (1), une sortie de récipient pour un rétentat et au moins un rotor (6) pouvant être entraîné en rotation autour de l'axe de récipient (5) et pourvu d'un arbre creux (8) monté dans une paroi frontale (7) et d'un dispositif de support (4) fixé à celui-ci pour des éléments filtrants (3) disposés à distance de l'axe de récipient (5) et qui sont en communication fluidique avec l'arbre creux (8) pour évacuer un perméat filtré du récipient (1), dans lequel une enveloppe intérieure du récipient (1) comprend au moins un dispositif de guidage (10) pour dévier le liquide contre les éléments filtrants (3),
**caractérisé en ce que** le dispositif comprend au moins un dispositif de conditionnement qui est aménagé pour régler des conditions de processus, une électrode (13) étant prévue comme ledit au moins un dispositif de conditionnement, une contre-électrode étant associée à au moins un élément filtrant (3) pour appliquer un champ de tension au récipient (1) ; et
au moins un dispositif de guidage (10) réalise un logement pour au moins un dispositif de conditionnement.

2. Dispositif selon la revendication 1, **caractérisé en ce qu'**entre ledit au moins un dispositif de guidage (10) et une enveloppe extérieure (12) du récipient (1) est réalisée une cavité (11) qui sert de logement pour ledit au moins un dispositif de conditionnement pour le réglage des conditions de processus.

3. Dispositif selon la revendication 1 ou 2, **caractérisé en ce que** ledit au moins un dispositif de guidage (10) servant de logement à une électrode (13) fait partie de l'électrode (13).

4. Dispositif selon la revendication 1 ou 2, **caractérisé en ce que** comme ledit au moins un dispositif de conditionnement, en outre un échangeur thermique (14) pour un fluide d'équilibrage de température est prévu dans le récipient (1) pour équilibrer la température du liquide à filtrer.

5. Dispositif selon la revendication 1 ou 2, **caractérisé en ce qu'**en outre un dispositif de dosage (15) pour des fluides de processus pouvant être injectés dans le récipient (1) est prévu comme ledit au moins un dispositif de conditionnement.

6. Dispositif selon l'une quelconque des revendications 1 à 5, **caractérisé en ce que** dans la zone de l'axe de récipient (5) est disposé un rotor ou un stator (17) présentant au moins un dispositif de guidage central (18) pour le fluide et qui réalise une cavité servant de logement pour ledit au moins un dispositif de conditionnement pour le réglage des conditions de processus.
